# EUROPÄISCHE PATENTSCHRIFT

(11) **EP 4 448 308 B1**
(45) Veröffentlichungstag und Bekanntmachung des Hinweises auf die Patenterteilung: **17.09.2025**
(21) Anmeldenummer: 22800582.3
(22) Anmeldetag: 25.10.2022
(51) Int. Cl.: B60C 15/06, B60C 15/00

(54) **BELASTUNGSRESISTENTER FAHRZEUGLUFTREIFEN**
STRESS-RESISTANT PNEUMATIQUE TIRE
PNEUMATIQUE RÉSISTANT AU STRESS

(30) Priorität: 16.12.2021 DE 102021214495
(43) Veröffentlichungstag der Anmeldung: 23.10.2024
(73) Patentinhaber: Continental Reifen Deutschland GmbH, 30175 Hannover (DE)
(72) Erfinder: LUDWIG, Reinhard, 30175 Hannover (DE); HELMICH, Tobias, 30175 Hannover (DE); SOO, Zi-Jie, Bundoora 3083 (AU)
(74) Vertreter: Continental Corporation
(86) Internationale Anmeldenummer: PCT/DE2022/200244
(87) Internationale Veröffentlichungsnummer: WO 2023/110026

(56) Entgegenhaltungen:
- EP-A1- 2 205 455
- EP-A1- 2 740 615
- EP-A2- 1 992 506
- EP-B1- 2 205 455
- DE-A1- 102006 020 308
- DE-A1- 102016 204 924
- DE-A1- 102016 204 925
- JP-A- 2015 067 256
- JP-A- H11 334 326

## Beschreibung

Die Erfindung betrifft einen Fahrzeugluftreifen, insbesondere einen belastungsresistenten Fahrzeugluftreifen mit einer zumindest abschnittsweise verstärkten Seitenwand.

Moderne Fahrzeugluftreifen sind im Einsatz zumeist vielfältigen Arten von mechanischen Belastungen ausgesetzt. Eine besonders schwerwiegende mechanische Belastung tritt dabei regelmäßig dann auf, wenn der Fahrzeugluftreifen ein Hindernis überrollt, beispielsweise in der Form von Schlaglöchern oder Bordsteinen. Insbesondere bei einem im Wesentlichen senkrechten Auftreten des Fahrzeugluftreifens auf eine Hinderniskante wird dieser stark beansprucht und deformiert. Hierbei wird die Seitenwand des Fahrzeugluftreifens gefaltet und zwischen dem Felgenhorn und dem Hindernis eingequetscht. Dadurch treten lokal sehr hohe Kräfte auf, welche beispielsweise die Verstärkungskorde in der Reifenkarkasse zum Reißen bringen und hierdurch ein lokales Materialversagen bewirken können.

Die bei der vorstehend beschriebenen Form der Belastung auftretenden Materialfehler im Fahrzeugluftreifen äußern sich dabei infolge der erfahrenen Deformation häufig als Materialrisse, die sowohl im Schulterbereich als auch insbesondere im Wulstbereich des Fahrzeugluftreifens auftreten. Dieses charakteristische Defektmuster wird zuweilen auch als "snake bites" bezeichnet, da die Risse an die Fangzähne einer Schlange erinnern.

Zur Steigerung der Resistenz von Fahrzeugluftreifens gegen diese Schäden, welche beim Überrollen von Schlaglöchern oder anderen Hindernissen auftreten, wurden in der Vergangenheit verschieden Konzepte entwickelt. Typische Aufbauten von Fahrzeugluftreifen bzw. in einigen Fällen entsprechende Lösungskonzepte zur Vermeidung von Materialfehlern sind beispielsweise in der DE 20 2012 007 834 U1, der DE 4427894 A1, der WO 2017/116410 A1, der US 2020/0231012 A1, der US 2008/0006359 A1, der DE 10 2018 131 897 A1 und der US 2018/0354306 A1 offenbart.

Die DE 10 2016 204 924 A1 betrifft einen Fahrzeugluftreifen mit Wulstverstärkern, deren gerade und linienförmige Festigkeitsträger einen Winkel von 48 bis 60° mit der Umfangsrichtung einschließen. Die DE 10 2016 204 925 A1 betrifft einen Fahrzeugluftreifen mit Wulstverstärkern, deren Festigkeitsträger aus dem gleichen Material bestehen und eine Feinheit < 700 dtex aufweisen. Die EP 2 740 615 A1 betrifft einen Fahrzeugluftreifen mit Wulstverstärkern, deren Festigkeitsträger gerade und linienförmig ausgebildet sind.

Die EP 2 205 455 A1 betrifft einen Fahrzeugreifen mit einer verbesserten Wulststruktur. Die JP 2015 067256 A betrifft einen Luftreifen, insbesondere einen Run-Flat-Reifen mit lastaufnehmenden Verstärkungslagen. Die EP 1 992 506 A2 betrifft einen Schwertransportreifen.

Die aus dem Stand der Technik bekannten Lösungen werden jedoch regelmäßig als unzureichend und/oder verbesserungsbedürftig empfunden, da sie in vielen Fällen hinsichtlich des erreichbaren Schnittschutzes, der erzielbaren Verstärkung des Reifens, der Stabilität der Gesamtkonstruktion, des resultierenden Reifengewichts und/oder hinsichtlich der Komplexität der Fertigung als nachteilig empfunden werden.

Es war die primäre Aufgabe der vorliegenden Erfindung, die vorstehend beschriebenen Nachteile des Standes der Technik auszuräumen oder zumindest zu verringern.

Insbesondere war es eine Aufgabe der vorliegenden Erfindung, einen Fahrzeugluftreifen anzugeben, mit dem der Zielkonflikt zwischen einer optimalen Seitenwandrobustheit und einem günstigen Rollwiderstand sowie niedrigen Gewicht des Fahrzeugluftreifens verbessert werden kann. Insoweit war es eine ergänzende Aufgabe, dass die anzugebenden Fahrzeugluftreifen im Betrieb zudem eine möglichst geringe Geräuschentwicklung bedingen sollten, die bei gleicher Resistenz gegen Beschädigungen insbesondere geringer sein sollte als bei Fahrzeugluftreifen mit zusätzlichen Karkasslagen.

Die anzugebenden Fahrzeugreifen sollten dabei wünschenswerterweise über ausgezeichnete Fahreigenschaften verfügen und auch beim Überrollen von kantigen Hindernissen einen hohen Widerstand gegen mechanische Beschädigungen aufweisen. Insoweit war es eine Aufgabe der Erfindung, dass das Auftreten von als "snake bites" bekannten Defekten vermindert oder sogar vollständig unterdrückt werden sollte bzw. dass die Anfälligkeit für diese Defekte und deren Auswirkungen auf die Betriebssicherheit vermindert werden sollte.

Insoweit war es wünschenswert, dass die anzugebenden Fahrzeugluftreifen hinsichtlich der zur Lösung der vorstehenden Probleme eingesetzten konstruktiven Maßnahmen sehr flexibel sind und die gefundene Lösung sich leicht an verschiedene existierende Konstruktionen von Fahrzeugluftreifen anpassen lässt. Dabei war es wünschenswert, dass die anzugebenden Fahrzeugluftreifen unter Verwendung solcher Materialien und Fertigungsmethoden herstellbar sein sollten, die bereits heute in der Fertigung moderner Fahrzeugluftreifen zum Einsatz kommen.

Es war vor diesem Hintergrund eine ergänzende Aufgabe der vorliegenden Erfindung, bevorzugte Ausgestaltungen anzugeben, mit denen sich die Resistenz der anzugebenden Fahrzeugluftreifen gegen mechanische Beschädigungen weiter erhöhen lässt und die eine spezifische Anpassung der anzugebenden Fahrzeugluftreifen auf verschiedene Belastungsszenarien ermöglichen, sodass die anzugebenden Fahrzeugluftreifen gezielt für besonders anspruchsvolle Anwendungen ausgelegt werden können.

Die Erfinder der vorliegenden Erfindung haben nunmehr erkannt, dass die vorstehend beschriebenen Aufgaben überraschenderweise gelöst werden können, wenn ein Verstärkungselement, welches über spezifisch orientierte Festigkeitsträger, insbesondere möglichst senkrecht zum Schnittverlauf stehende Festigkeitsträger, verfügt, in einem bestimmten Bereich des Fahrzeugluftreifens, insbesondere zwischen dem Lagenumschlag der Reifenkarkasse und der Außenseite der Reifenkarkasse, positioniert wird, wie es in den Ansprüchen definiert ist.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden.

Die Erfindung betrifft einen Fahrzeugluftreifen, insbesondere PKW-Reifen, umfassend:
a) eine Reifenkarkasse umfassend zumindest eine Karkasslage, und
b) ein erstes Wulstelement, umfassend einen ersten Wulstkern und eine erste Kernfahne,

wobei die zumindest eine Karkasslage zur Ausbildung eines ersten Wulstbereichs so um das erste Wulstelement herumgeschlagen ist, dass das Ende des resultierenden ersten Lagenumschlags relativ zur ersten Kernfahne in radialer Richtung weiter nach außen ragt,
wobei zwischen dem ersten Lagenumschlag und der vom Reifeninnenraum abgewandten Reifenaußenseite zumindest ein erstes Verstärkungselement angeordnet ist, welches in radialer Richtung zumindest teilweise auf Höhe der Kernfahne angeordnet ist,
wobei das erste Verstärkungselement eine Vielzahl von ersten Festigkeitsträgern umfasst, die in einem ersten Gummiwerkstoff eingebetteten sind, wobei die ersten Festigkeitsträger bezogen auf die Umfangsrichtung einen Kordwinkel im Bereich von 45° bis 90° aufweisen,
wobei zwischen dem ersten Verstärkungselement und dem ersten Lagenumschlag zumindest abschnittweise, ein oder mehrere weitere Elemente angeordnet sind,
wobei auf der der Reifenaußenseite zugewandten Seite des ersten Lagenumschlags ein erstes äußeres Apexelement angeordnet ist,
wobei das erste Verstärkungselement zumindest abschnittsweise an der Reifenaußenseite angeordnet ist.

Fahrzeugluftreifen, welche über eine Reifenkarkasse mit zumindest einer Karkasslage verfügen, sind dem Fachmann aus dem Stand der Technik bekannt. Für die überwiegende Zahl der Fälle relevant ist insoweit ein erfindungsgemäßer Fahrzeugluftreifen, wobei die Karkasslage eine oder die mehreren Karkasslagen eine Vielzahl von Karkassen-Festigkeitsträgern umfassen, die in einem Karkassen-Gummiwerkstoff eingebettet sind.

Der erfindungsgemäße Fahrzeugluftreifen verfügt über ein erstes Wulstelement, welches im ersten Wulstbereich liegt und dafür vorgesehen ist, bei der Anbringung des Fahrzeugluftreifens auf einer Felge für die notwendige Stabilität zu sorgen. Erfindungsgemäß umfasst das erste Wulstelement einen ersten Wulstkern und eine erste Kernfahne, wobei das erste Wulstelement bevorzugt aus diesen Komponenten besteht. Der Wulstkern kann grundsätzlich jedwede geometrische Form annehmen. Bevorzugt sind allerdings Ausgestaltungen, in denen der Wulstkern ein hexagonaler Wulstkern ist.

Der erste Wulstbereich wird gebildet, indem die Karkasslage der Reifenkarkasse um das erste Wulstelement herumgeschlagen wird. Durch diesen Umschlag wird ein erster Lagenumschlag gebildet, der erfindungsgemäß so um das gesamte erste Wulstelement, d. h. inklusive der Kernfahne, herumgeschlagen ist, dass er das erste Wulstelement, inklusive der ersten Kernfahne, überdeckt, was nach Erkenntnis der Erfinder notwendig ist, um eine ausgezeichnete mechanische Belastbarkeit zu realisieren. Dies wird vorliegend durch die Definition der Position des Endes der ersten Karkasslage in radialer Richtung relativ zur ersten Kernfahne ausgedrückt, welches nämlich weiter nach außen ragt als die erste Kernfahne.

**In** Übereinstimmung mit dem fachmännischen Verständnis handelt es sich bei den regelmäßig rotationssymmetrischen Fahrzeugluftreifen um Produkte, deren Aufbau zweckmäßigerweise relativ zu der radialen Richtung beschrieben wird, d.h. der von der Mitte des Fahrzeugluftreifens radial nach außen weisenden Richtung, sodass die radiale Richtung senkrecht auf der Rotationsachse des Fahrzeugluftreifens steht.

Der Fachmann im Bereich der Reifenfertigung ist es insoweit gewohnt, Relationen und Längenangaben, oder wie vorliegend Positionen, in dem Querschnitt durch den Fahrzeugluftreifen anzugeben, dessen Ebene orthogonal zur Umfangsrichtung steht, sodass der Blick des Betrachters in Umfangsrichtung zeigt. Dies ist, bedingt durch den im Wesentlichen radial symmetrischen Aufbau von Fahrzeugluftreifen, eine besonders geeignete Darstellung, um die konstruktiven Details eines Fahrzeugluftreifens und die relativen Abstände zuverlässig zu beschreiben. Entsprechend wird vorliegend auch die Position des Endes des resultierenden ersten Lagenumschlags relativ zur ersten Kernfahne, d.h. wie weit dieser in radialer Richtung nach außen ragt, in dieser Ebene definiert. Insoweit ist es für den Fachmann jedoch selbstverständlich, dass beispielsweise die Reifenkarkasse, der Laufstreifen und die Wulstbereiche in der überwiegenden Zahl der Fälle strang- bzw. ringförmige Elemente sind, welche sich zumeist um den gesamten Fahrzeugluftreifen herum erstrecken.

Der erfindungsgemäße Fahrzeugluftreifen umfasst ausgehend von diesem Grundaufbau nunmehr zumindest ein erstes Verstärkungselement, welches im unteren Bereich des Fahrzeugluftreifens angeordnet ist, so dass es in radialer Richtung zumindest teilweise auf Höhe der ersten Kernfahne, angeordnet ist. Dies umfasst beispielsweise sowohl Ausgestaltungen, in welchen sich das erste Verstärkungselement im Wesentlichen vollständig bis zur Höhe der Kernfahne in radialer Richtung erstreckt, als auch solche Ausführungsformen, in welchen das erste Verstärkungselement in radialer Richtung über die Kernfahne hinausreicht und demnach nur zum Teil auf Höhe der Kernfahne angeordnet ist, so dass es sich weiter in die Seitenwand des Fahrzeugluftreifens hinein erstreckt.

Das erste Verstärkungselement liegt dabei zumindest mit einem Teil der Länge zwischen dem Lagenumschlag und der Reifenaußenseite, d.h. auch zwischen der Reifenkarkasse und der Reifenaußenseite. Die Reifenaußenseite ist in Übereinstimmung mit dem fachmännischen Verständnis die von außen gut sichtbare Außenseite des Reifens, die nicht in den Reifeninnenraum gerichtet ist, wobei der Ausdruck Reifeninnenraum den im Betrieb mit Luft gefüllten Hohlraum des Fahrzeugluftreifens bezeichnet.

Das erste Verstärkungselement umfasst erfindungsgemäß eine Vielzahl von ersten Festigkeitsträgern, welche in einen Gummiwerkstoff eingearbeitet sind, wie es beispielsweise auch für die als Karkasslagen eingesetzten Verbundmaterialien häufig erfolgt. Die Festigkeitsträger im ersten Verstärkungselement sind dabei in besonderer Weise angeordnet. Die Festigkeitsträger sind im ersten Verstärkungselement nämlich so angeordnet, dass sie einen Kordwinkel zwischen 45° und 90° bezüglich der Umfangsrichtung des Fahrzeugluftreifens aufweisen. Für diese Definition ist eine weitere Bezugsrichtung relevant, mit der der Fachmann regelmäßig den Aufbau entsprechender Fahrzeugluftreifen beschreibt, nämlich die Umfangsrichtung des Fahrzeugluftreifens. In Übereinstimmung mit dem fachmännischen Verständnis handelt es sich hierbei an jedem Punkt des Kreisumfanges um die jeweilige Kreistangente, die mit der radialen Richtung, d.h. der Verbindung zwischen dem jeweiligen Punkt und dem Mittelpunkt des Reifens einen rechten Winkel einschließt. In herkömmlichen Radialreifen verlaufen die gummierten Karkassen-Festigkeitsträger der Karkasslagen im Wesentlichen radial. Dies bedeutet, dass die gummierten Karkassen-Festigkeitsträger der Karkasslage über die gesamte Breite der Reifenkarkasse quer zur Umfangsrichtung des Fahrzeugluftreifens mit der Umfangsrichtung einen Winkel von etwa 90° einschließen. Entsprechend liegt in einem herkömmlichen Radialreifen jeder gummierte Karkassen-Festigkeitsträger einer Karkasslage in der Draufsicht auf den Fahrzeugluftreifen über seine gesamte Länge im Wesentlichen im gleichen Kreisabschnitt. Die entsprechende Größe wird vom Fachmann auch als der sogenannte Kordwinkel der in der Karkasslage vorhandenen Karkassen-Festigkeitsträger bezeichnet. Auch wenn die Definition dieser Kordwinkel in Abhängigkeit von der Umfangsrichtung auf den ersten Blick umständlich erscheinen mag, ist es für den Fachmann in der Praxis zwanglos möglich, den Kordwinkel, d.h. den relativen Winkel eines Festigkeitsträgers zur Umfangsrichtung, zu bestimmen.

Vorstehend ist die erfindungsgemäße Ausgestaltung lediglich für eine Seitenwand des Fahrzeugluftreifens definiert. Dies ist zweckmäßig, da sich bereits mit einem erfindungsgemäß ausgestalteten Seitenbereich eine deutliche Verbesserung der mechanischen Belastbarkeit und zumindest einseitig ein ausgezeichneter Schnittschutz realisieren lässt, wobei bevorzugt die Seite des Fahrzeugluftreifens erfindungsgemäß ausgestaltet wird, die im Einsatz das äußere Felgenhorn der Felge kontaktiert. Für den Fachmann ist angesichts der in einem Fahrzeugluftreifen regelmäßig vorherrschenden Symmetrie jedoch verständlich, dass die vorstehend beschriebene Ausführung des ersten Seitenbereichs, d. h. der ersten Seite des Fahrzeugluftreifens mit dem ersten Lagenumschlag, dem ersten Wulstbereich, dem ersten Wulstelement, dem ersten Verstärkungselement etc., vorteilhafterweise auch auf der anderen Seite des Fahrzeugluftreifens realisiert werden kann, um einen besonders widerstandsfähigen und vorteilhaften Fahrzeugluftreifen zu schaffen. Dementsprechend sind erfindungsgemäße Fahrzeugluftreifen bevorzugt, die eine orthogonal zur Rotationsachse stehende Spiegelebene aufweisen. Deshalb sind auch erfindungsgemäße Fahrzeugluftreifen besonders bevorzugt, die auch ein zweites Wulstelement, umfassend einen zweiten Wulstkern und eine zweite Kernfahne, einen damit gebildeten zweiten Wulstbereich und einen entsprechenden zweiten Lagenumschlag aufweisen.

Es mag dabei für bestimmte Anwendungen vorteilhaft sein, die verschiedenen Seiten des Fahrzeugluftreifens unterschiedlich auszuführen und hierfür beispielsweise die Art und/oder Position des jeweiligen Verstärkungselements auf den verschiedenen Seiten des Fahrzeugluftreifens unterschiedlich auszuführen. Der Fachmann versteht jedoch, dass es für die überwiegende Zahl von Anwendungen explizit bevorzugt ist, wenn der Fahrzeugluftreifen auf beiden Seiten des Fahrzeugluftreifens über eine im Wesentlichen gleiche Konstruktion verfügt, sodass beispielsweise das Verstärkungselement jeweils gleichartig ausgeführt und positioniert wird. Entsprechend ist es im Rahmen der vorliegenden Erfindung bei sämtlichen Merkmalen, die für ein erstes Element offenbart werden, beispielsweise für den ersten Lagenumschlag, explizit bevorzugt, wenn das entsprechende Merkmal auf beide Seiten des Fahrzeugluftreifens, d.h. für das erste und das entsprechende zweite Element, realisiert wird.

Häufig umfassen Fahrzeugluftreifen eine sogenannte Reifeninnenschicht, welche insbesondere der luftdichten Versiegelung des Reifens dient. Für die meisten Anwendungen bevorzugt ist daher grundsätzlich ein erfindungsgemäßer Fahrzeugluftreifen, umfassend eine relativ zur Reifenkarkasse in radialer Richtung innenliegende Reifeninnenschicht.

Es ist üblich, dass oberhalb der Reifenkarkasse, d. h. radial außenliegend, ein Laufstreifen vorgesehen ist, welcher für den späteren Kontakt mit der Fahrbahn bestimmt ist, wobei zwischen der Reifenkarkasse und dem Laufstreifen optional Verstärkungslagen vorgesehen werden können. Für die meisten Anwendungen bevorzugt ist insofern ein erfindungsgemäßer Fahrzeugluftreifen umfassend einen relativ zur Reifenkarkasse in radialer Richtung außenliegenden Laufstreifen, wobei bevorzugt zwischen dem Laufstreifen und der Reifenkarkasse eine oder mehrere weitere Lagen, besonders bevorzugt Gürtellagen, angeordnet sind. Bevorzugt ist dabei ein erfindungsgemäßer Fahrzeugluftreifen, wobei der Laufstreifen an der der Reifenkarkasse abgewandten Außenseite ein Profil aufweist. Bevorzugt ist zusätzlich oder alternativ ein erfindungsgemäßer Fahrzeugluftreifen, wobei der Laufstreifen einen oder mehrere Laufstreifen-Gummiwerkstoffe umfasst.

Mit Blick auf eine möglichst hohe Resistenz gegen Quetschungen der Seitenwand ist es zumindest prinzipiell eine Option, mehrere Karkasslagen in der Reifenkarkasse vorzusehen. Zur Lösung des vorstehend beschriebenen Zielkonflikts zwischen hinreichender Robustheit und niedrigem Gewicht ist es jedoch explizit bevorzugt, wenn die Reifenkarkasse lediglich eine Karkasslage umfasst, da dies in Kombination mit dem erfindungsgemäß einzusetzenden ersten Verstärkungselement eine gute Resistenz gegen mechanische Beschädigung beim Überrollen von Hindernissen ermöglicht, ohne das Gewicht zu nachteilig zu beeinflussen. Bevorzugt ist demnach ein erfindungsgemäßer Fahrzeugluftreifen, wobei die Reifenkarkasse genau eine Karkasslage umfasst.

Im Stand der Technik wurde vorgeschlagen, dass die eine oder eine von mehreren Karkasslagen unterhalb des Laufstreifens mit einer Unterbrechung ausgeführt werden kann, was für spezifische Anwendungen vorteilhaft sein mag. Mit Blick auf die erfindungsgemäßen Fahrzeugluftreifen ist es jedoch explizit bevorzugt, wenn es sich bei der zumindest einen bzw. sogar bei sämtlichen Karkasslagen um durchgehende Karkasslagen handelt, d. h. um Karkasslagen, welche nicht unterbrochen sind. Bevorzugt ist ebenso ein erfindungsgemäßer Fahrzeugluftreifen, wobei sich zumindest eine Karkasslage, bevorzugt sämtliche Karkasslagen, als durchgehende Karkasslage quer zur Umfangsrichtung durch die gesamte Reifenkarkasse erstreckt.

Wie vorstehend erläutert, hat der Kordwinkel der Festigkeitsträger des ersten Verstärkungselements eine große Relevanz für die erzielbaren mechanischen Eigenschaften, insbesondere bezüglich der Stabilität der Seitenwand und demzufolge auch bezüglich der Resistenz gegen die durch das Überrollen von Hindernissen entstehenden Schäden. Die Erfinder haben insoweit besonders geeignete Parameter für den Kordwinkel identifiziert, bei denen sich die vorstehend genannten Vorteile der vorliegenden Erfindung besonders effektiv entfalten. Bevorzugt ist entsprechend ein erfindungsgemäßer Fahrzeugluftreifen, wobei die ersten Festigkeitsträger bezogen auf die Umfangsrichtung einen Kordwinkel im Bereich von 60° bis 90°, bevorzugt im Bereich von 70° bis 90°, besonders bevorzugt im Bereich von 80° bis 90°, ganz besonders bevorzugt im Bereich von 85° bis 90°, insbesondere bevorzugt im Bereich von 88° bis 90°, aufweisen.

Es kann grundsätzlich als Vorteil des erfindungsgemäßen Fahrzeugluftreifens angesehen werden, dass das erste Verstärkungselement relativ flexibel positioniert werden kann, sofern es außen vom Lagenumschlag angeordnet wird und nicht beispielsweise zwischen der ersten Karkasslage und dem ersten Wulstelement oder zwischen der ersten Karkasslage und dem ersten Lagenumschlag, da insbesondere Letzteres mit Blick auf die erzielbare Verbundfestigkeit nachteilig sein kann. Das erste Verstärkungselement kann beispielsweise unmittelbar am ersten Lagenumschlag der ersten Karkasslage um das Wulstelement, angeordnet werden. Hierbei steht das erste Verstärkungselement zumindest teilweise, bevorzugt im Wesentlichen vollständig mit der Reifenkarkasse in unmittelbarem Kontakt. Eine entsprechende Anordnung ist dabei nicht nur mit Blick auf eine einfache Fertigung günstig. Insbesondere beim Einsatz von kleinen Kordwinkeln im ersten Verstärkungselement können die ersten Festigkeitsträger des ersten Verstärkungselements mit den typischerweise radial verlaufenden Festigkeitsträgern der ersten Karkasslage im ersten Lagenumschlag in der Draufsicht eine Art Gitterstruktur bilden, so dass eine besonders stabile Schicht gebildet wird, welche dem Auftreten von Rissen, insbesondere "snake bites", besonders effizient entgegenwirkt. Bevorzugt ist demnach ein erfindungsgemäßer Fahrzeugluftreifen, wobei das erste Verstärkungselement zumindest abschnittsweise den ersten Lagenumschlag kontaktiert, bevorzugt über 50 % oder mehr, besonders bevorzugt über 60 % oder mehr, ganz besonders bevorzugt über 70 % oder mehr, der Länge des ersten Verstärkungselements in radialer Richtung.

In einer anderen bevorzugten Ausführungsform werden das erste Verstärkungselement und der erste Lagenumschlag zumindest abschnittsweise durch ein oder mehrere weitere Elemente räumlich getrennt. Hierdurch wird das Verstärkungselement weiter nach außen in Richtung des Felgenhorns verschoben, so dass die Schutzwirkung des Verstärkungselements auch auf die weiteren Elemente erstreckt, die zwischen dem ersten Verstärkungselement und dem ersten Lagenumschlag platziert sind. Eine Weiterentwicklung dieses Ansatzes sieht vor, dass das erste Verstärkungselement sogar direkt an der Reifenaußenseite, d. h. unmittelbar an der Oberfläche des Fahrzeugluftreifens angeordnet werden kann, so dass der unmittelbare Kontaktbereich zwischen Reifenaußenseite und Felgenhorn verstärkt wird und eventuelle Reibungsbereiche besonders gut geschützt werden. Hierbei wurde gefunden, dass durch diese Anordnung überraschenderweise die beim Überrollen von Hindernissen auftretenden Kräfte insgesamt besonders günstig im Fahrzeugluftreifen verteilt werden können und dass einem ungewollten Aufplatzen der Seitenwand besonders effizient entgegengewirkt werden kann, wobei diese Ausgestaltung sich nach Einschätzung der Erfinder diesbezüglich sogar als die vorteilhafteste Anordnung erwiesen hat. Erfindungsgemäß ist deshalb ein erfindungsgemäßer Fahrzeugluftreifen, wobei zwischen dem ersten Verstärkungselement und dem ersten Lagenumschlag zumindest abschnittweise, ein oder mehrere weitere Elemente angeordnet sind. Erfindungsgemäß ist auch ein erfindungsgemäßer Fahrzeugluftreifen wobei das erste Verstärkungselement zumindest abschnittsweise an der Reifenaußenseite angeordnet ist, bevorzugt über 70 % oder mehr, besonders bevorzugt über 80 % oder mehr, ganz besonders bevorzugt über 90 % oder mehr, der Länge des ersten Verstärkungselements in radialer Richtung.

Wie vorstehend erläutert, sind erfindungsgemäß ein oder mehrere weitere Elemente zwischen dem ersten Lagenumschlag und dem ersten Verstärkungselement angeordnet. In einer solchen Konfiguration wird erfindungsgemäß ein weiteres Element aus einem steifen Gummiwerkstoff eingesetzt, wie er beispielsweise auch in der ersten Kernfahne verarbeitet werden kann. Dieses weitere Element, welches als äußeres Apexelement bezeichnet wird und zumindest teilweise auf der Außenseite des ersten Lagenumschlags aufliegt, verleiht dem Fahrzeugluftreifen im Seitenbereich eine besonders vorteilhafte Steifigkeit. Die Erfinder haben nunmehr erkannt, dass eine Positionierung des ersten Verstärkungselements auf diesem äußeren Apexelement, d.h. die Applikation des mit Festigkeitsträgern versehenen Verbundmaterials auf dem relativ steifen äußeren Apexelement, welches das erste Verstärkungselement quasi stütz, in synergistischer Weise zu einem Verbund führt, der insbesondere gegen ungewünschte Perforationen und Einschnitte in die Seitenwand besonders geschützt ist. Hierbei kann mit einem hinreichend lagen ersten Verstärkungselement, welches in radialer Richtung zumindest teilweise über das äußere Apexelement hinüberragt, dieses besonders gut im Verbund des Fahrzeugluftreifens fixiert werden, beispielsweise durch einen Einschluss des äußeren Apexelements zwischen dem ersten Verstärkungselement und dem ersten Lagenumschlag bzw. der Reifenkarkasse. Bevorzugt ist demnach ein erfindungsgemäßer Fahrzeugluftreifen, wobei das erste Verstärkungselement zumindest abschnittsweise die der Reifenaußenseite zugewandte Seite des ersten äußeren Apexelements kontaktiert, bevorzugt über 70 % oder mehr, besonders bevorzugt über 80 % oder mehr, ganz besonders bevorzugt über 90 % oder mehr, der Länge des ersten Verstärkungselements in radialer Richtung und/oder wobei das erste Verstärkungselement am oberen und/oder unteren Ende, bevorzugt an beiden Enden, über das erste äußere Apexelement hinausragt. Bevorzugt ist dabei ein erfindungsgemäßer Fahrzeugluftreifen, wobei das erste äußere Apexelement in radialer Richtung zumindest teilweise auf Höhe der Kernfahne angeordnet ist, wobei das erste äußere Apexelement sich in radialer Richtung bevorzugt aus dem ersten Wulstbereich hinaus über das Ende der ersten Kernfahne hinweg in die Seitenwand des Fahrzeugluftreifens hinein erstreckt.

Auch wenn die Vorteile der vorliegenden Erfindung grundsätzlich in verschiedenen Ausgestaltungen zum Tragen kommen, sind doch explizit solche Ausführungsformen bevorzugt, in welchen das erste Verstärkungselement größere Abmessungen aufweist als die erste Kernfahne, besonders bevorzugt größere Abmessungen als das gesamte erste Wulstelement. Dies ist insoweit sinnvoll, da hierdurch ein effektiver Schutz in weiten Teilen der Seitenwand ermöglicht werden kann, insbesondere, wenn sich das erste Verstärkungselement auch über das Ende des ersten Lagenumschlags hinweg erstreckt. Bevorzugt ist grundsätzlich ein erfindungsgemäßer Fahrzeugluftreifen, wobei sich das erste Verstärkungselement in radialer Richtung aus dem ersten Wulstbereich hinaus über das Ende der ersten Kernfahne hinweg in die Seitenwand des Fahrzeugluftreifens hinein erstreckt.

Die Erfinder haben erkannt, dass es hinsichtlich der erzielbaren Verbundfestigkeit vorteilhaft ist, wenn das untere Ende des ersten Verstärkungselements nicht tiefer, d.h. in radialer Richtung näher an der Felge, liegt, als das unterste Ende des ersten Wulstelements und auch nicht um dieses herumgeschlagen ist, so dass das erste Verstärkungselement nicht unterhalb des Wulstkerns zwischen Wulstkern und Felge liegt. Bevorzugt ist deshalb ein erfindungsgemäßer Fahrzeugluftreifen, wobei das untere Ende des ersten Verstärkungselements in radialer Richtung auf Höhe des ersten Wulstkerns, bevorzugt auf Höhe des Mittelpunkts des ersten Wulstkerns, angeordnet ist. Bevorzugt ist in anderen Worten ein erfindungsgemäßer Fahrzeugluftreifen, wobei das untere Ende des ersten Verstärkungselements zwischen dem ersten Wulstkern und der Reifenaußenseite angeordnet ist. Bevorzugt ist auch ein erfindungsgemäßer Fahrzeugluftreifen, wobei das untere Ende des ersten Verstärkungselements nicht um den in radialer Richtung am weitesten innenliegenden Punkt des ersten Wulstelements herum verläuft. Bevorzugt ist insoweit auch ein erfindungsgemäßer Fahrzeugluftreifen, wobei das untere Ende des ersten Verstärkungselements in radialer Richtung von der Unterkante des Wulstbereichs einen Abstand im Bereich von 0,01*h bis 0,3*h, bevorzugt im Bereich von 0,02*h bis 0,2*h, besonders bevorzugt im Bereich von 0,05*h bis 0,15*h, aufweist, wobei h die Höhe des Fahrzeugluftreifens ist, gemessen von der Unterkante des Wulstbereichs bis zur Oberseite des Laufstreifens.

Grundsätzlich kann das erste Verstärkungselement in erfindungsgemäßen Fahrzeugluftreifen derartig angeordnet sein, dass es den beim Überrollen eines Hindernisses entstehenden Schäden auch dadurch entgegenwirkt, dass es solche Bereiche der Seitenwand stabilisiert, die besonders anfällig für Materialfehler sind, insbesondere für solche Materialfehler, die als Auflösungen des Verbundes an der Grenzfläche verschiedener Elemente auftreten können. Dementsprechend ist es besonders bevorzugt, wenn das erste Verstärkungselement das radial äußere Ende der ersten Kernfahne und/oder das Ende des ersten Lagenumschlags überdeckt. Bevorzugt ist demgemäß ein erfindungsgemäßer Fahrzeugluftreifen, wobei das obere Ende des ersten Verstärkungselements in radialer Richtung weiter nach außen ragt als das Ende der Kernfahne. Bevorzugt ist zusätzlich oder alternativ ein erfindungsgemäßer Fahrzeugluftreifen, wobei das obere Ende des ersten Verstärkungselements in radialer Richtung weiter nach außen ragt als das Ende des ersten Lagenumschlags. Bevorzugt ist mit Blick auf die übliche Dimensionierung von Kernfahnen und Lagenumschlägen insoweit ein erfindungsgemäßer Fahrzeugreifen, wobei das obere Ende des ersten Verstärkungselements in radialer Richtung von der Unterkante des Wulstbereichs einen Abstand im Bereich von 0,3*h bis 1,0*h, bevorzugt im Bereich von 0,4*h bis 0,6*h, besonders bevorzugt im Bereich von 0,45*h bis 0,55*h, aufweist, wobei h die Höhe des Fahrzeugluftreifens ist, gemessen von der Unterkante des Wulstbereichs bis zur Oberseite des Laufstreifens.

Mit Blick auf das Gesamtgewicht des Fahrzeugluftreifens ist es prinzipiell vorteilhaft, das erste Verstärkungselement in der Abmessung zu begrenzen. Gleichzeitig ist ein sich über die gesamte Länge der Seitenwand des Fahrzeugluftreifens erstreckendes erstes Verstärkungselement insbesondere für die Stabilität der Seitenwand eine durchaus bevorzugte Ausführungsform. In den meisten Fällen ist es zur Lösung des entsprechenden Zielkonflikts jedoch sinnvoll, ein vergleichsweise kurzes Verstärkungselement vorzusehen, da einerseits das Gesamtgewicht des Fahrzeugluftreifens nicht übermäßig erhöht wird und andererseits durch die spezifische Platzierung Beschädigungen gezielt lokal vorgebeugt wird, indem das Verstärkungselement in Bereichen, welche besonders hohen Belastungen ausgesetzt sind, angeordnet wird. Bevorzugt ist nämlich ein erfindungsgemäßer Fahrzeugluftreifen, wobei das erste Verstärkungselement in radialer Richtung eine Länge aufweist, die im Bereich von 50 bis 250 %, bevorzugt im Bereich von 60 bis 200 %, besonders bevorzugt im Bereich von 75 bis 150 %, besonders bevorzugt 75 bis 100 %, der Länge der ersten Kernfahne liegt. Bevorzugt ist für typische Abmessungen von Fahrzeugluftreifen dabei ein erfindungsgemäßer Fahrzeugluftreifen, wobei das erste Verstärkungselement in radialer Richtung eine Länge aufweist, die im Bereich von 20 bis 100 mm, bevorzugt im Bereich von 30 bis 60 mm, besonders bevorzugt im Bereich von 30 bis 40 mm, liegt. Bevorzugt ist bezogen auf die Höhe des Fahrzeugluftreifens ein erfindungsgemäßer Fahrzeugluftreifen, wobei das erste Verstärkungselement in radialer Richtung eine Länge aufweist, die im Bereich von 0,1*h bis 1,0*h, bevorzugt im Bereich von 0,2*h bis 0,6*h, besonders bevorzugt im Bereich von 0,3*h bis 0,5*h, ganz besonders bevorzugt im Bereich von 0,35*h bis 0,45*h, aufweist, wobei h die Höhe des Fahrzeugluftreifens ist, gemessen von der Unterkante des Wulstbereichs bis zur Oberseite des Laufstreifens.

Die Erfinder haben mit Blick auf die vorstehend beschriebene Gewichtsoptimierung zudem erkannt, dass das erfindungsgemäß einzusetzenden erste Verstärkungselement vorteilhafterweise besonders dünn ausgeführt werden kann, ohne die vorteilhafte Wirkung auf die Seitenwandrobustheit zu stark zu reduzieren, was insbesondere für das erzielbare Gesamtgewicht und den Rollwiderstand günstig ist. Bevorzugt ist vor diesem Hintergrund auch ein erfindungsgemäßer Fahrzeugluftreifen, wobei das erste Verstärkungselement eine Dicke im Bereich von 0,2 bis 4,0 mm, bevorzugt im Bereich von 0,5 bis 2,5 mm, besonders bevorzugt im Bereich von 0,9 bis 1,8 mm, aufweist.

Auch wenn das erste Verstärkungselement hinsichtlich seiner Eigenschaften durch eine gezielte Materialauswahl an bestimmte Leistungsanforderungen angepasst werden kann, kann es als großer Vorteil der vorliegenden Erfindung angesehen werden, dass das erste Verstärkungselement aus ähnlichen bzw. sogar im Wesentlichen aus dem gleichen Verbundmaterial gefertigt werden kann, welches auch in der ersten Karkasslage eingesetzt wird. Bevorzugt ist deshalb ein erfindungsgemäßer Fahrzeugluftreifen, wobei das erste Verstärkungselement und die Reifenkarkasse, bevorzugt die Karkasslage, einen gleichartigen Gummiwerkstoff umfassen. Bevorzugt ist zudem ein erfindungsgemäßer Fahrzeugluftreifen, wobei das erste Verstärkungselement und die Reifenkarkasse, bevorzugt die Karkasslage, gleichartige Festigkeitsträger umfassen. Besonders bevorzugt ist auch ein erfindungsgemäßer Fahrzeugluftreifen, wobei das erste Verstärkungselement und die Karkasslage zumindest teilweise aus dem gleichen Verbundmaterial ausgebildet sind.

Den Erfindern der vorliegenden Erfindung ist es insoweit gelungen, für die Karkasslage und/oder das erste Verstärkungselement solche Festigkeitsträger und Gummiwerkstoffe zu identifizieren, mit denen sich besonders leistungsfähige Fahrzeugluftreifen erhalten lassen. Bevorzugt ist nämlich ein erfindungsgemäßer Fahrzeugluftreifen, wobei die Karkassen-Festigkeitsträger und/oder die ersten Festigkeitsträger ausgewählt sind aus der Gruppe bestehend aus metallischen und textilen Festigkeitsträgern, bevorzugt textilen Festigkeitsträgern, besonders bevorzugt textilen Festigkeitsträgern mit zumindest einem Garn, wobei das Garn aus einem Material besteht, welches ausgewählt ist aus der Gruppe bestehend aus Aramid, Polyethylenterephthalat, Polyetherketon, Polyketon, Polyethylennaphtalat, Rayon, Viskose, Kohlefasern, Naturfasern, Glasfasern und PBO (Poly(p-phenylen-2,6-benzobisoxazol)), ganz besonders bevorzugt ausgewählt ist aus der Gruppe bestehend aus Aramid und Polyethylenterephthalat. Bevorzugt ist zusätzlich oder alternativ auch ein erfindungsgemäßer Fahrzeugluftreifen, wobei der erste Gummiwerkstoff und/oder der Karkassen-Gummiwerkstoff herstellbar ist durch Vulkanisation einer vulkanisierbaren Kautschukmischung, wobei die vulkanisierbare Kautschukmischung bevorzugt zumindest einen Dienkautschuk und zumindest einen Füllstoff umfasst.

Nach Einschätzung der Erfinder ist es besonders vorteilhaft, wenn die erste Kernfahne und das erste äußere Apexelement aus einem Gummiwerkstoff ausgebildet werden, welcher eine höhere Steifigkeit und daher einen höheren E-Modul aufweist als die Gummiwerkstoffe des Verstärkungselements und der Gummiwerkstoff der Reifenkarkasse, da hierdurch ein ausgezeichneter Sitz auf der Felge und eine hohe Grundrobustheit erreicht werden können und die steife Unterlage die vorteilhafte Wirkung des ersten Verstärkungselements in synergistischer Weise steigern kann. Bevorzugt ist folglich ein erfindungsgemäßer Fahrzeugluftreifen, wobei die erste Kernfahne einen Kernfahnen-Gummiwerkstoff umfasst oder aus diesem besteht. Bevorzugt ist ebenfalls ein erfindungsgemäßer Fahrzeugluftreifen, wobei das erste äußere Apexelement einen Apex-Gummiwerkstoff umfasst oder aus diesem besteht. Bevorzugt ist dabei ein erfindungsgemäßer Fahrzeugluftreifen, wobei der Kernfahnen-Gummiwerkstoff und/oder der Apex-Gummiwerkstoff herstellbar ist durch Vulkanisation einer vulkanisierbaren Kautschukmischung, wobei die vulkanisierbare Kautschukmischung bevorzugt zumindest einen Dienkautschuk und zumindest einen Füllstoff umfasst. Besonders bevorzugt ist insoweit ein erfindungsgemäßer Fahrzeugluftreifen, wobei der Kernfahnen-Gummiwerkstoff und/oder der Apex-Gummiwerkstoff, bevorzugt der Kernfahnen-Gummiwerkstoff und der Apex-Gummiwerkstoff, einen höheren E-Modul aufweist, als der Karkassen-Gummiwerkstoff und/oder der erste Gummiwerkstoff, bevorzugt der Karkassen-Gummiwerkstoff und der erste Gummiwerkstoff. Bevorzugt ist zudem ein erfindungsgemäßer Fahrzeugluftreifen, wobei die erste Kernfahne und das erste äußere Apexelement einen gleichartigen Gummiwerkstoff umfassen.

Mit Blick auf den Schutz des Kontaktbereichs zwischen Felge und Reifenaußenseite ist es beim Aufziehen des Fahrzeugluftreifens auf die Felge bevorzugt, wenn erste Verstärkungselement zumindest abschnittsweise, bevorzugt im Wesentlichen vollständig, auch auf der Höhe des Felgenhorns angeordnet wird. Bei dieser Ausrichtung können vom Felgenhorn ausgeübte mechanische Belastungen durch das erste Verstärkungselement besonders effizient abgefangen werden, wobei das erste Verstärkungselement dadurch so platziert ist, dass es im Bereich der höchsten Dichte an "snake bites" liegt, so dass ein großer Teil der auftretenden Risse vermieden werden kann, insbesondere wenn das erste Verstärkungselement an der Reifenaußenseite liegt. Bevorzugt ist also grundsätzlich ein erfindungsgemäßer Fahrzeugluftreifen, wobei der Fahrzeugluftreifen so auf einer Reifenfelge mit einem umlaufenden Felgenhorn montiert ist, dass das Ende des Felgenhorns in radialer Richtung zumindest abschnittsweise, bevorzugt durchgehend, auf Höhe des ersten Verstärkungselements liegt, wobei das Felgenhorn das erste Verstärkungselement bevorzugt kontaktiert.

**In** besonders bevorzugten Ausführungsformen wird die Lehre der vorliegenden Erfindung zudem mit spezifisch auf die Anforderungen des jeweiligen Einsatzzweckes abgestimmten Konstruktionen der Reifenkarkasse kombiniert. Bevorzugt ist beispielsweise ein erfindungsgemäßer Fahrzeugluftreifen, wobei das Ende des ersten Lagenumschlags so angeordnet sind, dass es in der orthogonal zur Umfangsrichtung stehenden Ebene von der Unterkante des ersten Wulstbereichs einen Abstand von mehr als 0,7*h, bevorzugt mehr als 0,8*h, besonders bevorzugt mehr als 0,9*h, aufweisen, wobei h die Höhe des Fahrzeugluftreifens ist, gemessen von der Unterkante des ersten Wulstbereichs bis zur Oberseite des Laufstreifens, wobei das Ende des ersten Lagenumschlags bevorzugt relativ zum Laufstreifen, besonders bevorzugt relativ zum Laufstreifen und etwaigen Gürtellagen, in radialer Richtung weiter innen liegt.

Zusätzlich oder alternativ ist es bevorzugt, wenn die Reifenkarkasse eine zweite Karkasslage und optional weitere Karkasslagen umfasst. Diese zweite Karkasslage kann dabei in der gleichen Weise ausgeführt sein, wie die vorstehend definierte Karkasslage, wobei die zweite Karkasslage in bevorzugten Ausführungsformen in gleicher Weise ausgeführt ist, wie die vorstehend definierte Karkasslage. Bevorzugt ist dabei insbesondere ein erfindungsgemäßer Fahrzeugluftreifen, wobei die zweite Karkasslage so um das erste Wulstelement herumgeschlagen ist, dass das Ende des resultierenden Lagenumschlags relativ zur ersten Kernfahne in radialer Richtung weiter nach außen ragt. Alternativ ist ein erfindungsgemäßer Fahrzeugluftreifen bevorzugt, wobei die zweite Karkasslage im ersten Wulstbereich auf Höhe des ersten Wulstkerns endet.

Die zweite Karkasslage kann relativ zur vorstehend definierten Karkasslage in radialer Richtung innen, bspw. zwischen der Karkasslage und einer Reifeninnenschicht, oder außen liegen. Im Falle einer außenliegenden zweiten Karkasslage ist besonders bevorzugt, wenn die zweite Karkasslage im ersten Wulstbereich auf Höhe des ersten Wulstkerns endet und die erste Kernfahne und den ersten Lagenumschlag überdeckt.

Für bestimmte Anwendungen bevorzugt ist ein erfindungsgemäßer Fahrzeugluftreifen, wobei die Reifenkarkasse eine dritte Karkasslage umfasst.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Querschnittsdarstellung einer Seitenwand eines ersten nicht erfindungsgemäßen Fahrzeugluftreifens;
- Fig. 2: eine schematische Querschnittsdarstellung einer Seitenwand eines zweiten nicht erfindungsgemäßen Fahrzeugluftreifens;
- Fig. 3: eine schematische Querschnittsdarstellung einer Seitenwand eines erfindungsgemäßen Fahrzeugluftreifens in einer bevorzugten Ausführungsform.

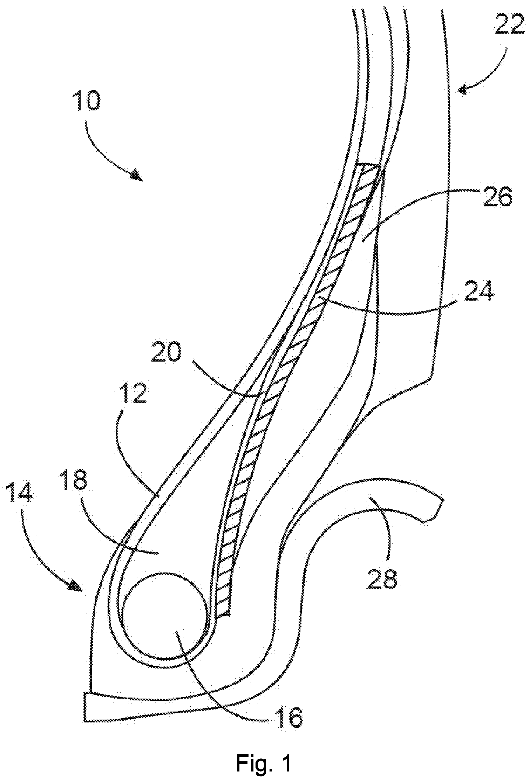

Die Fig. 1 bis 3 zeigen jeweils schematisch unterschiedliche Ausführungsformen der Konstruktion der Seitenwände und Wulstbereiche eines Fahrzeugluftreifens 10, wobei aus Gründen der Übersichtlichkeit jeweils nur eine Seite des Fahrzeugluftreifens 10 gezeigt ist, dessen zweite Seitenwand in den gezeigten Beispielen jedoch jeweils im Wesentlichen baugleich ausgeführt ist. Die Reifenkarkasse in den gezeigten Fahrzeugluftreifen 10 umfasst genau eine durchgehende Karkasslage 12, die sich durch alle Bereiche der Reifenkarkasse erstreckt. Diese Karkasslage 12 umfasst eine Vielzahl von Karkassen-Festigkeitsträgern, die in einem Karkassen-Gummiwerkstoff eingebettet sind.

Die erste Karkasslage 12 ist um ein erstes Wulstelement 14 herumgeschlagen, welches dafür vorgesehen ist, bei der Anbringung der gezeigten Fahrzeugluftreifen 10 auf einer Felge, die in den Fig. 1 bis 3 über das Felgenhorn 28 angedeutet wird, für die notwendige Stabilität zu sorgen.

Das erste Wulstelement 14 besteht aus einem ersten Wulstkern 16 und einer daran angeordneten ersten Kernfahne 18. Durch den Umschlag der Karkasslage 12 um das erste Wulstelement 14 bildet sich ein Überstand der Karkasslage 12, welcher als erster Lagenumschlag 20 bezeichnet wird. Der erste Lagenumschlag 20 reicht jeweils in radialer Richtung, d.h. in den Fig. 1 bis 3 in vertikaler Richtung, über die erste Kernfahne 18 hinaus.

Die in den Fig. 1 bis 3 dargestellten beispielhaften Seitenwände der Fahrzeugluftreifen 10, umfassen zudem jeweils ein erstes äußeres Apexelement 26 und ein erstes Verstärkungselement 24. Das erste äußere Apexelement 26 und das erste Verstärkungselement 24 sind jeweils zumindest teilweise auf Höhe der ersten Kernfahne 18 angeordnet. Das erste Verstärkungselement 24 umfasst eine Vielzahl von Festigkeitsträgern, welche in einen Gummiwerkstoff eingearbeitet sind, wohingegen das erste äußere Apexelement 26 aus dem gleichen Gummiwerkstoff besteht wie die erste Kernfahne 18, wobei der E-Modul dieses Gummiwerkstoffs höher ist als der E-Modul des Gummiwerkstoffs, der in der Karkasslage 12 und dem ersten Verstärkungselement 24 verarbeitet ist.

Die Festigkeitsträger des Verstärkungselements 24 sind in den vorliegenden Beispielen als textile Festigkeitsträger aus Aramid ausgeführt und weisen jeweils relativ zur Umfangsrichtung einen Kordwinkel von etwa 80° auf, der sich dadurch vom Kordwinkel der im Wesentlichen radial verlaufenden Karkassen-Festigkeitsträger in der ersten Karkasslage 12 unterscheidet.

Das Verstärkungselement 24 liegt in den drei gezeigten Beispielen jeweils zumindest abschnittsweise zwischen dem ersten Lagenumschlag 20 und der vom Reifeninnenraum abgewandten Reifenaußenseite 22. Dabei weist das Verstärkungselement 24 in den dargestellten Beispielen jeweils in etwa eine Dicke von 1,1 mm auf und umfasst den gleichen Gummiwerkstoff, welcher in der Reifenkarkasse verarbeitet ist.

In Fig. 1 ist das erste Verstärkungselement 24 in einer nicht erfindungsgemäßen Ausgestaltung zwischen dem Lagenumschlag 20 und dem äußeren Apexelement 26 angeordnet. Das erste Verstärkungselement 24 erstreckt sich dabei in radialer Richtung von der Höhe des Mittelpunkts des ersten Wulstkerns 16 bis zum oberen, d.h. radial äußeren, Ende des ersten Lagenumschlags 20. Hierbei kontaktiert das erste Verstärkungselement 24 den ersten Lagenumschlag 20 in radialer Richtung im Wesentlichen über die gesamte Länge.

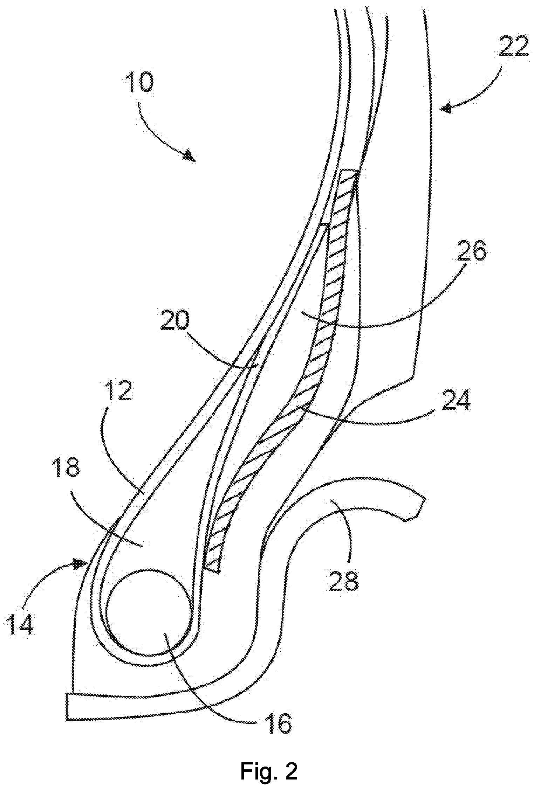

In Fig. 2 ist das erste Verstärkungselement 24 in einer zweiten nicht erfindungsgemäßen Ausgestaltung hingegen an der zur Reifenaußenseite 22 weisenden Seite des äußeren Apexelements 26 angebracht, welches somit abschnittsweise zwischen dem ersten Lagenumschlag 20 und dem ersten Verstärkungselement 24 angeordnet ist. Das erste Verstärkungselement 24 erstreckt sich dabei in radialer Richtung etwa von der Höhe des oberen Endes des Wulstkerns 16 bis über den ersten Lagenumschlag 20 und das äußere Apexelement 26 hinaus. Dadurch ragt das erste Verstärkungselement 24 am oberen und unteren Ende, d.h. radial innen und außen, über das erste äußere Apexelement 26 hinaus.

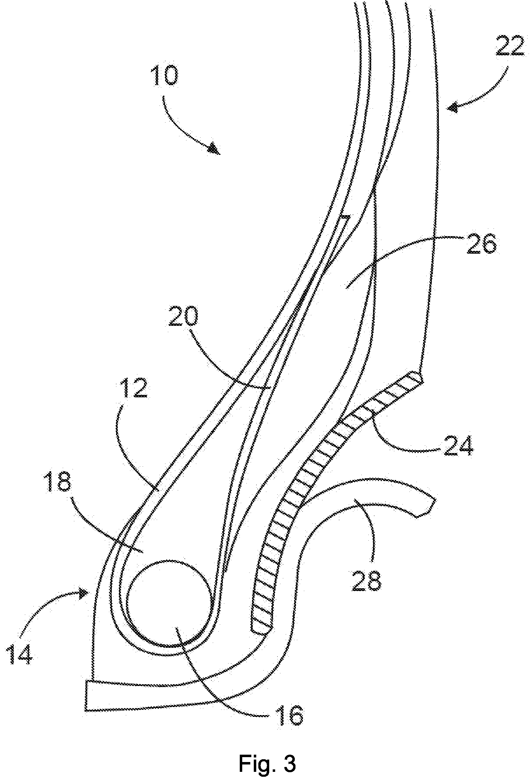

Weder in Fig. 1 noch in Fig. 2 liegt das erste Verstärkungselement 24 erfindungsgemäß an der Reifenaußenseite 22. **In** der erfindungsgemäßen Ausgestaltung der Fig. 3 ist das erste Verstärkungselement 24 in radialer Richtung über seine gesamte Länge an der Reifenaußenseite 22 so angeordnet, dass es zumindest teilweise im unmittelbaren Kontakt mit dem Felgenhorn 28 steht. Das erste Verstärkungselement 24 erstreckt sich dabei in radialer Richtung von der Höhe des unteren Endes des Wulstkerns 16 bis knapp unter das Ende der ersten Kernfahne 18.

### Bezugszeichenliste

- 10: Fahrzeugluftreifen
- 12: Karkasslage
- 14: Wulstelement
- 16: Wulstkern
- 18: Kernfahne
- 20: Lagenumschlag
- 22: Reifenaußenseite
- 24: Verstärkungselement
- 26: Apexelement
- 28: Felgenhorn

## Patentansprüche

1. Fahrzeugluftreifen (10), insbesondere PKW-Reifen, umfassend:
a) eine Reifenkarkasse umfassend zumindest eine Karkasslage (12), und
b) ein erstes Wulstelement (14), umfassend einen ersten Wulstkern (16) und eine erste Kernfahne (18),
wobei die zumindest eine Karkasslage (12) zur Ausbildung eines ersten Wulstbereichs so um das erste Wulstelement (14) herumgeschlagen ist, dass das Ende des resultierenden ersten Lagenumschlags (20) relativ zur ersten Kernfahne (18) in radialer Richtung weiter nach außen ragt,
wobei zwischen dem ersten Lagenumschlag (20) und der vom Reifeninnenraum abgewandten Reifenaußenseite (22) zumindest ein erstes Verstärkungselement (24) angeordnet ist, welches in radialer Richtung zumindest teilweise auf Höhe der Kernfahne (18) angeordnet ist,
wobei das erste Verstärkungselement (24) eine Vielzahl von ersten Festigkeitsträgern umfasst, die in einem ersten Gummiwerkstoff eingebetteten sind, wobei die ersten Festigkeitsträger bezogen auf die Umfangsrichtung einen Kordwinkel im Bereich von 45° bis 90° aufweisen,
wobei zwischen dem ersten Verstärkungselement (24) und dem ersten Lagenumschlag (20) zumindest abschnittweise, ein oder mehrere weitere Elemente angeordnet sind,
wobei auf der der Reifenaußenseite (22) zugewandten Seite des ersten Lagenumschlags (20) ein erstes äußeres Apexelement (26) angeordnet ist,
wobei das erste Verstärkungselement (24) zumindest abschnittsweise an der Reifenaußenseite (22) angeordnet ist.

2. Fahrzeugluftreifen (10) nach Anspruch 1, wobei die ersten Festigkeitsträger bezogen auf die Umfangsrichtung einen Kordwinkel im Bereich von 60° bis 90°, bevorzugt im Bereich von 70° bis 90°, besonders bevorzugt im Bereich von 80° bis 90°, ganz besonders bevorzugt im Bereich von 85° bis 90°, insbesondere bevorzugt im Bereich von 88° bis 90°, aufweisen.

3. Fahrzeugluftreifen (10) nach einem der Ansprüche 1 oder 2, wobei das erste Verstärkungselement (24) über 70 % oder mehr, bevorzugt über 80 % oder mehr, besonders bevorzugt über 90 % oder mehr, der Länge des ersten Verstärkungselements (24) in radialer Richtung an der Reifenaußenseite angeordnet ist.

4. Fahrzeugluftreifen (10) nach einem der Ansprüche 1 bis 3, wobei das untere Ende des ersten Verstärkungselements (24) in radialer Richtung auf Höhe des ersten Wulstkerns (16), bevorzugt auf Höhe des Mittelpunkts des ersten Wulstkerns (16), angeordnet ist.

5. Fahrzeugluftreifen (10) nach einem der Ansprüche 1 bis 4, wobei das obere Ende des ersten Verstärkungselements (24) in radialer Richtung weiter nach außen ragt als das Ende der Kernfahne (18), und/oder wobei das obere Ende des ersten Verstärkungselements (24) in radialer Richtung weiter nach außen ragt als das Ende des ersten Lagenumschlags (20).

6. Fahrzeugluftreifen (10) nach einem der Ansprüche 1 bis 5, wobei das erste Verstärkungselement (24) und die Karkasslage (12) zumindest teilweise aus dem gleichen Verbundmaterial ausgebildet sind.

7. Fahrzeugluftreifen (10) nach einem der Ansprüche 1 bis 6, wobei der Fahrzeugluftreifen (10) so auf einer Reifenfelge mit einem umlaufenden Felgenhorn (28) montiert ist, dass das Ende des Felgenhorns (28) in radialer Richtung zumindest abschnittsweise, bevorzugt durchgehend, auf Höhe des ersten Verstärkungselements (24) liegt, wobei das Felgenhorn (28) das erste Verstärkungselement (24) bevorzugt kontaktiert.

## Claims

1. Pneumatic vehicle tyre (10), in particular passenger motor vehicle tyre, comprising
a) a tyre carcass comprising at least one carcass ply (12), and
b) a first bead element (14) comprising a first bead core (16) and a first flipper strip (18),
wherein the at least one carcass ply (12) for forming a first bead region is folded about the first bead element (14) in such a way that the end of the resulting first ply fold-over (20) protrudes further outwards in the radial direction relative to the first flipper strip (18),
wherein disposed between the first ply fold-over (20) and the tyre outer side (22) facing away from the tyre interior is at least one first reinforcement element (24) which in the radial direction is disposed at least partially at the height level of the flipper strip (18),
wherein the first reinforcement element (24) comprises a multiplicity of first strength members which are embedded in a first rubber material, wherein the first strength members in terms of the circumferential direction have a cord angle in the range from 45° to 90°,
wherein one or a plurality of further elements are disposed, at least in portions, between the first reinforcement element (24) and the first ply fold-over (20).
wherein a first outer apex element (26) is disposed on the side of the first ply fold-over (20) that faces the tyre outer side (22),
wherein the first reinforcement element (24) is disposed at least in portions on the tyre outer side (22).

2. Pneumatic vehicle tyre (10) according to Claim 1, wherein the first strength member in terms of the circumferential direction has a cord angle in the range of 60° to 90°, preferably in the range of 70° to 90°, particularly preferably in the range from 80° to 90°, most preferably in the range from 85° to 90°, particularly preferably in the range from 88° to 90°.

3. Pneumatic vehicle tyre (10) according to one of Claims 1 or 2, wherein the first reinforcement element (24) is disposed in a radial direction on the outside of the tyre over 70 % or more, preferably over 80 % or more, more preferably over 90 % or more, of the length of the first reinforcement element (24).

4. Pneumatic vehicle tyre (10) according to one of Claims 1 to 3, wherein the lower end of the first reinforcement element (24) is disposed in the radial direction at the height level of the first bead core (16), preferably at the height level of the centre point of the first bead core (16).

5. Pneumatic vehicle tyre (10) according to one of Claims 1 to 4, wherein the upper end of the first reinforcement element (24) extends in the radial direction further outwards than the end of the flipper strip (18), and/or wherein the upper end of the first reinforcement element (24) extends radially outwards beyond the end of the first ply fold-over (20).

6. Pneumatic vehicle tyre (10) according to one of Claims 1 to 5, wherein the first reinforcement element (24) and the carcass ply (12) are at least partially formed from the same composite material.

7. Pneumatic vehicle tyre (10) according to one of Claims 1 to 6, wherein the pneumatic vehicle tyre (10) is assembled on a tyre rim with a circumferential rim flange (28) in such a way that the end of the rim flange (28) lies in the radial direction at least in portions, preferably continuously, at the height level of the first reinforcement element (24), wherein the rim flange (28) preferably contacts the first reinforcement element (24).

## Revendications

1. Pneumatique (10) de véhicule, en particulier pneumatique de voiture particulière, comprenant :
a) une carcasse de pneumatique comprenant au moins une couche (12) de carcasse et
b) un premier élément (14) de talon, comprenant une première tringle (16) et une première bandelette (18),
ladite au moins une couche (12) de carcasse étant rabattue, pour la formation d'une première zone de talon, autour du premier élément (14) de talon de telle sorte que l'extrémité du premier rabat (20) de couche résultant dépasse plus loin vers l'extérieur dans la direction radiale par rapport à la première bandelette (18), au moins un premier élément raidisseur (24) étant agencé entre le premier rabat (20) de couche et la face externe (22) de pneumatique à l'opposé de l'espace interne de pneumatique, lequel élément raidisseur est agencé, dans la direction radiale, au moins partiellement à hauteur de la bandelette (18),
le premier élément raidisseur (24) comprenant une pluralité de premiers supports de renforcement, qui sont incorporés dans un premier matériau de caoutchouc, les premiers supports de renforcement présentant, par rapport à la direction périphérique, un angle de corde dans la plage de 45° à 90°,
un ou plusieurs autres éléments étant agencés, au moins par sections, entre le premier élément raidisseur (24) et le premier rabat (20) de couche,
un premier élément d'apex (26) externe étant agencé sur la face orientée vers la face externe (22) de pneumatique du premier rabat (20) de couche,
le premier élément raidisseur (24) étant agencé au moins par sections au niveau de la face externe (22) de pneumatique.

2. Pneumatique (10) de véhicule selon la revendication 1, les premiers support de renforcement présentant, par rapport à la direction périphérique, un angle de corde dans la plage de 60° à 90°, de préférence dans la plage de 70° à 90°, de manière particulièrement préférée dans la plage de 80° à 90°, de manière tout particulièrement préférée dans la plage de 85° à 90°, en particulier de préférence dans la plage de 88° à 90°.

3. Pneumatique (10) de véhicule selon l'une des revendications 1 ou 2, le premier élément raidisseur (24) étant agencé sur 70% ou plus, de préférence sur 80% ou plus, de manière particulièrement préférée sur 90% ou plus, de la longueur du premier élément raidisseur (24), dans la direction radiale, sur la face externe du pneumatique.

4. Pneumatique (10) de véhicule selon l'une des revendications 1 à 3, l'extrémité inférieure du premier élément raidisseur (24) étant agencée, dans la direction radiale, à hauteur de la première tringle (16), de préférence à hauteur du point central de la première tringle (16).

5. Pneumatique (10) de véhicule selon l'une des revendications 1 à 4, l'extrémité supérieure du premier élément raidisseur (24) dépassant, dans la direction radiale, plus loin vers l'extérieur que l'extrémité de la bandelette (18) et/ou l'extrémité supérieure du premier élément raidisseur (24) dépassant, dans la direction radiale, plus loin vers l'extérieur que la première extrémité du premier rabat (20) de couche.

6. Pneumatique (10) de véhicule selon l'une des revendications 1 à 5, le premier élément raidisseur (24) et la couche (12) de carcasse étant réalisés au moins partiellement à partir du même matériau composite.

7. Pneumatique (10) de véhicule selon l'une des revendications 1 à 6, le pneumatique (10) de véhicule étant monté sur une jante de pneumatique pourvue d'un rebord (28) périphérique de jante de telle sorte que l'extrémité du rebord (28) de jante se situe, dans la direction radiale, au moins par sections, de préférence en continu, à hauteur du premier élément raidisseur (24), le rebord (28) de jante étant de préférence en contact avec le premier élément raidisseur (24).
